# EUROPEAN PATENT APPLICATION

(11) **EP 4 549 003 A1**
(43) Date of publication of application: **07.05.2025**
(21) Application number: 24210919.7
(22) Date of filing: 05.11.2024
(51) Int. Cl.: B01D 53/94, B01D 46/24, F01N 3/035, F01N 3/20

(54) **CATALYTIC PARTIAL WALL-FLOW FILTER**

(30) Priority: 06.11.2023 US 202363596317 P
(71) Applicant: Johnson Matthey Public Limited Company, London EC2V 7AD (GB)
(72) Inventor: BOUNECHADA, Djamela, Reading, RG4 9NH (GB); FOSCHI, Francesco, Royston, SG8 5HE (GB); JAHOVIC, Ilma, Royston, SG8 5HE (GB); KORSGREN, John Gustaf, 42131 Gothenburg (SE); MARVELL, David Robert, Royston, SG8 5HE (GB); WALTON, Mark James, Royston, SG8 5HE (GB); ZIESMANN, Martin, 96257 Redwitz (DE)
(74) Representative: Boult Wade Tennant LLP

(57) **Abstract**

A catalytic partial wall-flow filter suitable for use in an exhaust gas treatment system, a method of making the catalytic partial wall-flow filter, and a method of using the catalytic partial wall-flow filter to remediate engine exhaust streams are disclosed. The filter comprises a partial wall-flow filter substrate having an inlet end, an outlet end, and a plurality of porous walls forming channels from the inlet end to the outlet end, wherein some of the channels are plugged channels and some are unplugged flow-through channels. A selective catalytic reduction (SCR) catalyst is coated on the porous walls.

## Description

### FIELD OF THE INVENTION

The present invention relates to a catalytic partial wall-flow filter suitable for use in an exhaust gas treatment system, such as an automobile internal combustion exhaust system. The invention provides an effective method for remediating engine exhaust streams.

### BACKGROUND OF THE INVENTION

There are concerns about emissions of particulate matter (PM) from internal combustion engines such as diesel, gasoline, or hydrogen engines in automotive applications. The main concerns are associated with potential health effects, and in particular with very tiny particles having sizes in the nanometer range.

Diesel particulate filters (DPFs) and gasoline particulate filters (GPFs) have been fabricated using a variety of materials including sintered metal, ceramic or metal fibres etc., with the most common type in actual mass production being the wall-flow kind made from porous ceramic material fabricated in the form of a monolithic array of many small channels running along the length of the body. Alternate channels are plugged at one end so the exhaust gas is forced through the porous ceramic channel walls that prevent most of the particulate from passing through so only filtered gas enters the environment. Ceramic wall-flow filters in commercial production include those made from cordierite, various forms of silicon carbide and aluminium titanate. The actual shape and dimensions of practical filters on vehicles as well as properties such as the channel wall thickness and its porosity etc. depend on the application concerned. The average dimensions of the pores in the filter channel walls of a ceramic wall-flow filter through which the gas passes are typically in the range 5 to 50 µm and usually about 20 µm. In marked contrast, the size of most diesel particulate matter from a modern passenger car high speed diesel engine is much smaller, e.g., 10 to 200 nm.

The most widely used DPFs are wall-flow filters. A conventional wall-flow filter includes a ceramic honeycomb body having longitudinal, generally parallel cell channels formed by a plurality of intersecting porous walls. The cell channels are typically plugged with a ceramic plugging cement to form a checkered pattern of plugs at the end faces of the honeycomb body. The cell channels of the filter typically have some ends unplugged at an inlet end face of the honeycomb body, referred to herein as "inlet channels." Likewise, typically, the cell channels also have the remaining ends plugged to form a checkered pattern of plugs at an outlet end face of the honeycomb substrate with some ends unplugged, herein referred to as "outlet channels."

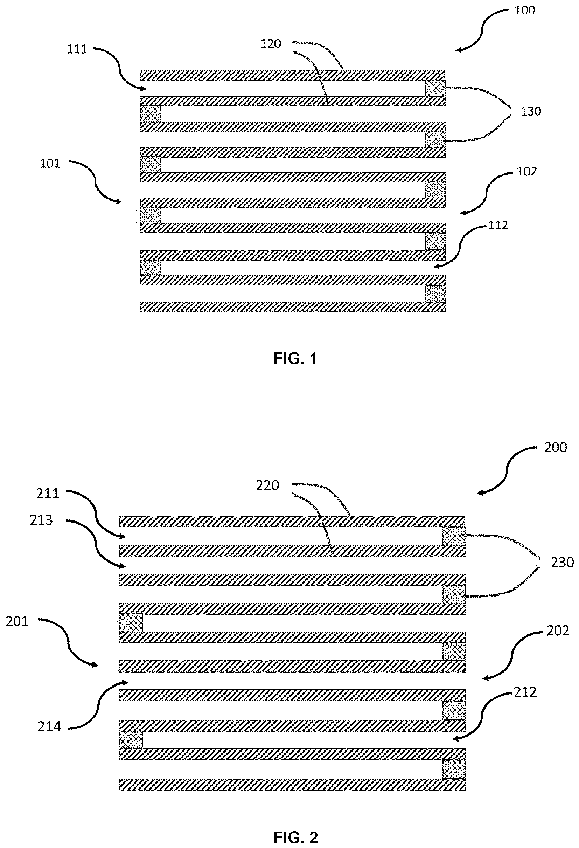

A conventional porous wall-flow filter 100 as shown in FIG. 1 includes an inlet end 101, an outlet end 102, and a plurality of generally parallel cell channels (inlet cell channels 111 and outlet cell channels 112) separated by porous cell walls 120. The inlet channels include plugs 130 at the outlet end 102. The outlet channels include plugs at the inlet end 101. The plugs 130 are generally located at the ends of the cell channels and typically have a depth of about 5 to 20 mm.

Some PM may be retained within the pore structure in the filter walls and this may in some applications gradually build up until the pores are bridged over by a network of PM and this PM network then enables the easy formation of a cake of particulate on the internal walls of the filter channels. The particulate cake is an excellent filter medium and its presence affords very high filtration efficiency. In some applications soot is burned continuously on the filter as it is deposited which prevents a particulate cake from building up on the filter.

For some filters, for example light duty diesel particulate filters, it is periodically necessary to remove trapped PM from the filter to prevent the build-up of excessive back pressure that is detrimental to engine performance and can cause poor fuel economy. So in diesel applications, retained PM is removed from the filter by burning it in air in a process during which the amount of air available and the amount of excess fuel used to achieve the high temperature needed to ignite the retained PM are very carefully controlled. Towards the end of this process, that is usually called regeneration, the removal of the last remaining particulate in the filter can lead to a marked decrease in filtration efficiency and release of a burst of many small particles into the environment. Thus, filters may have low filtration efficiency when they are first used and subsequently after each regeneration event and also during the latter part of each regeneration process.

Thus, it would be desirable to improve and/or maintain filtration efficiency at all times - for example during the early life of a filter when it is first used, and or during regeneration and immediately afterwards, and or when the filter is loaded with soot.

Diesel exhaust systems based on "active" regeneration have become the industry standard because they desirably operate at lower exhaust temperatures and assure suitable soot removal under different engine duty cycles by implementing regeneration. On the other hand, "active" regeneration comes with a fuel economy penalty. Further, conventional filters may exhibit relatively high back pressure. Accordingly, systems and filters which operate with fewer regeneration events during operation are desired, as are filters exhibiting lower backpressures.

### SUMMARY OF THE INVENTION

According to a first aspect there is provided a catalytic partial wall-flow filter for use in an exhaust gas treatment system, the filter comprising:
a) a partial wall-flow filter substrate having an inlet end, an outlet end, and a plurality of porous walls forming channels from the inlet end to the outlet end, wherein some of the channels are plugged channels and some are unplugged flow-through channels; and
b) a selective catalytic reduction (SCR) catalyst coated on the porous walls.

According to a second aspect there is provided a method for the manufacture of a catalytic partial wall-flow monolith filter, the method comprising:
(a) providing a partial wall-flow filter substrate having an inlet end, an outlet end, and a plurality of porous walls forming channels from the inlet end to the outlet end, wherein some of the channels are plugged channels and some are unplugged flow-through channels; and
(b) applying a SCR catalyst washcoat slurry on the porous walls to form a coated wall -flow filter substrate;
(c) calcining the coated wall-flow filter substrate to produce the partial catalytic wall-flow filter.

According to a third aspect there is provided an exhaust gas treatment system for treating a flow of a combustion exhaust gas, the system comprising the catalytic partial wall-flow filter according to this invention, wherein the inlet end is upstream of the outlet end.

According to a fourth aspect there is provided a method for treating a flow of a combustion exhaust gas comprising NOₓ, the method comprising passing the exhaust stream through the catalytic partial wall-flow filter according to this invention, wherein the inlet end is upstream of the outlet end.

### BRIEF DESCRIPTION OF THE DRAWINGS

The accompanying drawings, described below, illustrate exemplary embodiments and are not to be considered limiting of the scope of the invention. The figures are not necessarily to scale, and certain features and certain view of the figures may be shown exaggerated in scale or in schematic in the interest of clarity and conciseness.
FIG. 1 shows a conventional wall-flow filter substrate.
FIG. 2 shows a first embodiment of a partial wall-flow filter substrate.
FIG. 3 shows a second embodiment of a partial wall-flow filter substrate.
FIG. 4 shows a third embodiment of a partial wall-flow filter substrate.
FIG. 6 shows a fourth embodiment of a partial wall-flow filter substrate.

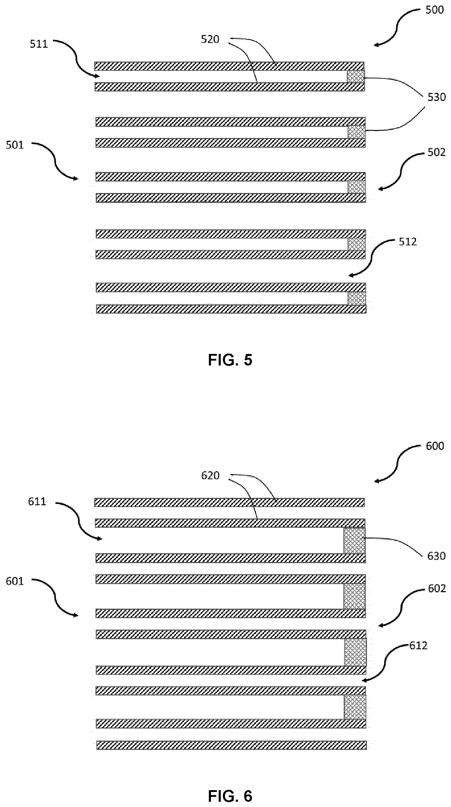

FIG. 6 shows a fifth embodiment of a partial wall-flow filter substrate.

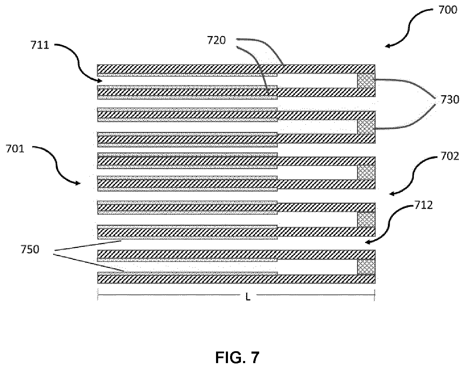

FIG. 7 shows a partial wall-flow filter substrate coated with a SCR catalyst.

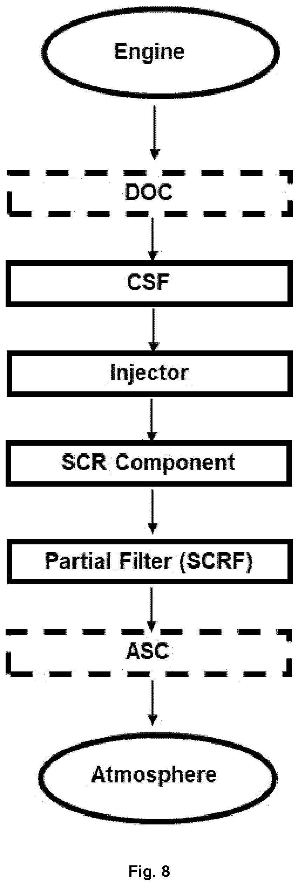

FIG. 8 shows an exemplary configuration of the exhaust gas treatment system.

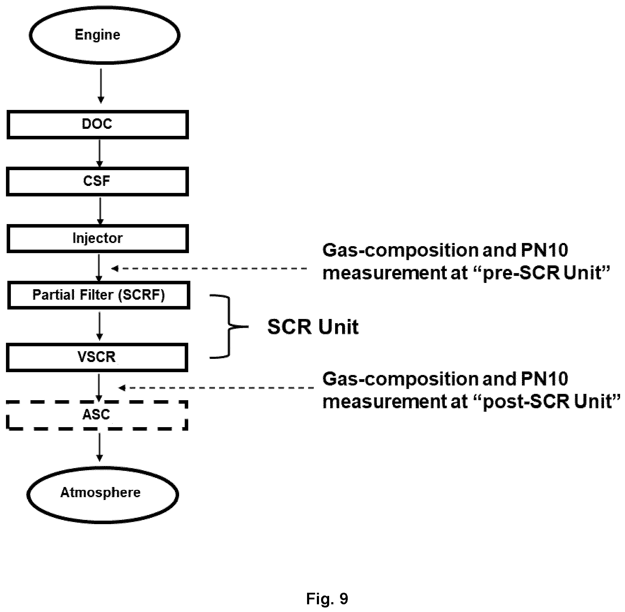

FIG. 9 shows an exhaust gas treatment system for performance test.

### DETAILED DESCRIPTION OF THE INVENTION

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

According to a first aspect there is provided a catalytic partial wall-flow filter for use in an exhaust gas treatment system, the filter comprising:
a) a partial wall-flow filter substrate having an inlet end, an outlet end, and a plurality of porous walls forming channels from the inlet end to the outlet end, wherein some of the channels are plugged channels and some are unplugged flow-through channels; and
b) a selective catalytic reduction (SCR) catalyst coated on the porous walls.

The catalytic partial wall-flow filter comprises a partial wall-flow filter substrate (e.g., ceramic honeycomb monoliths). Suitable materials of the partial wall-flow filter substrate include ceramic-like materials such as cordierite, alumina, silicon carbide, silicon nitride, zirconia, mullite, spodumene, alumina-silica-magnesia or zirconium silicate, or porous, refractory metal. The partial wall-flow filter substrate may also be formed of ceramic fiber composite materials.

The partial wall-flow filter substrate is known. See, e.g., US 20110132194A1. A partial wall-flow filter substrate exhibits a combination of plugged channels and unplugged flow-through channels. In the unplugged flow-through channels, flow is generally straight through the channel, i.e., not through the wall. In the plugged channels some of the flow passes through the walls. Thus, the "partial" indicates that only a part of the flow is through the walls whereas part of the flow passes through the filter without flowing through a wall.

Suitable partial wall-flow filter substrates are described in US 20110132194A1, of which the entire contents are incorporated herein by reference. FIG. 2 is a first embodiment of a partial wall-flow filter substrate 200. The partial wall-flow filter 200 comprises a plurality of porous walls 220 forming channels 211, 212, 213, and 214 wherein some of the channels are plugged channels and the remainder are unplugged flow-through channels (213, 214). In this embodiment, the plugged channels (211, 212) include some channels that are plugged adjacent to an inlet end 201 of the filter substrate 200, that is, at or near the inlet end 201. The other channels 211 are plugged adjacent to an outlet end of the filter substrate 200, that is, at or near the outlet end 202. Plugs 230 may be provided at, for example, an end face of some of the channels, while the remaining channels 213, 214 remain open (unplugged). This differs from the conventional wall-flow filter shown in FIG. 1 where all the cell channels are end-plugged (at inlet end or the outlet end).

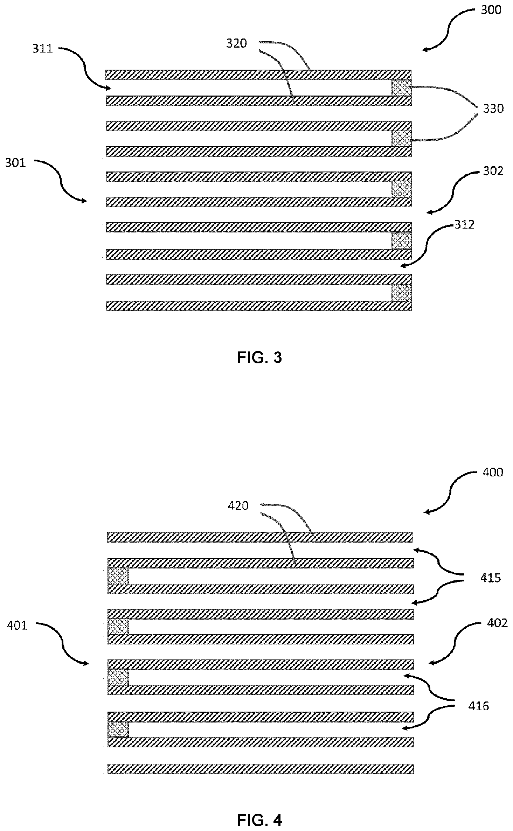

A second embodiment of a partial wall-flow filter substrate 300 is shown and described with reference to FIG. 3. In this embodiment, the filter substrate 300 includes a plurality of porous walls 320 to define and form a plurality of channels. The channels include some which are unplugged (unplugged channels 312) and some which are plugged (plugged channels 311). In this embodiment, the plugs 330 are all included on the outlet end 302 of the filter 300. In this embodiment, approximately 50% of the channels are plugged and the remainder comprise flow-through channels.

A third embodiment of a partial wall-flow filter substrate 400 is shown and described with reference to FIG. 4. In this embodiment, the filter substrate 400 includes a plurality of porous walls 420 to define and form a plurality of channels. The channels include some which are unplugged (unplugged channels 415) and some which are plugged (plugged channels 416). In this embodiment, the plugs 430 are all included on the inlet end 402 of the filter 400. In this embodiment, approximately 50% of the channels are plugged and the remainder comprise flow-through channels.

The channels of the partial wall-flow filter substrate may be of different sizes. For examples, the hydraulic diameters of the unplugged, flow-through channels may be different from those of the plugged channels. In some embodiments, the hydraulic diameter of the plugged channels are larger than the hydraulic diameter of the unplugged, flow-through channels. In some embodiments, the hydraulic diameter of the plugged channels are smaller than the hydraulic diameter of the unplugged, flow-through channels.

A fourth embodiment of a partial wall-flow filter substrate 500 is shown and described with reference to FIG. 5. In this embodiment, the filter substrate 500 includes a plurality of porous walls 520 to define and form a plurality of channels. The channels include some which are unplugged (unplugged channels 512) and some which are plugged (plugged channels 511). The plugs are all included on the inlet end 501 of the filter substrate 500. Approximately 50% of the channels are plugged and the remainder comprise flow-through channels. In this embodiment, unplugged flow-through channels (512) are bigger in width than the plugged channels (channel 511).

A fifth embodiment of a partial wall-flow filter substrate 600 is shown and described with reference to FIG. 6. In this embodiment, the filter substrate 600 includes a plurality of porous walls 620 to define and form a plurality of channels. The channels include some which are unplugged (612) and some which are plugged (611). The plugs are all included on the outlet end 602 of the filter substrate 600. Approximately 50% of the channels are plugged and the remainder comprise flow-through channels. In this embodiment, unplugged flow-through channels (612) are smaller in width than the plugged channels (611).

The partial wall-flow filter substrate may have a cylindrical shape. The transverse cross-section of the partial wall-flow filter substrate may be circular, oval, elliptical, square, or may have other desirable shapes. The channels of the partial wall-flow filter substrate may have a square cross-section or other type of cross-section, e.g., triangle, circle, octagon, rectangle, hexagon or combinations thereof.

Generally, the partial wall-flow filter substrate may have a porosity of 40 to 75%. Suitable techniques for determining porosity are known in the art and include mercury porosimetry and X-ray tomography.

The catalytic wall-flow monolith filter comprises a selective catalytic reduction (SCR) catalyst coated on the porous walls. The "SCR catalyst coated on the porous walls" may be "in-wall", "on-wall", or a combination of "in-wall" and "on-wall" coating. "In-wall" means that the SCR catalyst is primarily present in the pores within the porous walls. For example, in an "in-wall" coating, the amount of the SCR catalyst in the pores within the porous walls is greater than 80%, greater than 85%, greater than 90%, or greater than 95% relative to the total amount of the SCR catalyst applied to the partial wall-flow filter substrate. "On-wall" means the SCR catalyst is primarily present as a catalyst coating on the surface of the porous walls. For example, in an "on-wall" coating, the amount of the SCR catalyst on the surface of the porous walls is greater than 80%, greater than 85%, greater than 90%, or greater than 95% relative to the total amount of the SCR catalyst applied to the partial wall-flow filter substrate. As would be appreciated by a person skilled in the art, the percentage of the coating that is present "on-wall" can be determined by known techniques, such as scanning electron microscopy (SEM) or optical microscopy.

The SCR catalyst can be applied to the partial wall-flow filter substrate in the form of a washcoat. The techniques for "in-wall" or "on-wall" application can depend on the viscosity of the washcoat slurry applied, the application technique (spraying or dipping, for example) and the presence of different solvents. Such application techniques are known in the art. The viscosity of the washcoat slurry is influenced, for example, by its solids content. It is also influenced by the particle size distribution of the washcoat - a relatively flat distribution will give a different viscosity to a finely milled washcoat with a sharp peak in its particle size distribution - and rheology modifiers such as guar gums and other gums. Suitable coating methods are described in US6,599,570, US8,703,236, US9,138,735 and US20180229228A1.

The SCR catalyst generally comprises an oxide of a base metal, a molecular sieve, a metal-exchanged molecular sieve, or a mixture thereof. The base metal can be selected from the group consisting of cerium (Ce), chromium (Cr), cobalt (Co), copper (Cu), iron (Fe), manganese (Mn), molybdenum (Mo), nickel (Ni), tungsten (W), vanadium (V), and mixtures thereof. SCR catalysts consisting of vanadium supported on a refractory metal oxide such as alumina, silica, zirconia, titania, ceria and combinations thereof are well known and widely used commercially in mobile applications. Typical compositions are described in US4,010,238 and US4,085,193, of which the entire contents are incorporated herein by reference. Compositions used commercially, especially in mobile applications, comprise TiOz onto which WO₃ and V₂O₅ have been dispersed at concentrations ranging from 5 to 20 wt% and 0.5 to 6 wt%, respectively. These catalysts may contain other inorganic materials such as SiOz and ZrOz acting as binders and/or promoters.

The SCR catalyst may comprise vanadium and cerium. The molar ratio of cerium to vanadium can be from 0.3 to 0.7 or from 0.4 to 0.6. The SCR catalyst may comprise vanadium in an amount of 2-6 wt%, or 3-5 wt% on a V₂O₅ basis and cerium in an amount of 1-10 wt% or 2-5 wt% on a CeOz basis. Employing cerium and vanadium in such proportions reduces vanadium volatilisation without reducing the activity of the SCR catalyst. The reduced volatilisation permits a greater loading of vanadium, which is desirable for improving the efficiency of the SCR catalyst. In addition to vanadium and cerium, the SCR catalyst may additionally comprise antimony. Antimony may be present in an amount such that molar ratio of antimony to vanadium is from 0.6 to 0.9, or from 0.7 to 0.8. Antimony may be present as Sb₂O₅. By way of example, the SCR catalyst may comprise 2-6 wt% V₂O₅, 2-6 wt% CeO₂, and 3-8 wt% Sb₂O₅ relative to the total weight of the SCR catalyst.

The SCR catalyst can comprise a molecular sieve or a metal-exchanged molecular sieve. As is used herein "molecular sieve" is understood to mean a metastable material containing tiny pores of a precise and uniform size that may be used as an adsorbent for gases or liquids. The molecular sieve can be a zeolitic molecular sieve, a non-zeolitic molecular sieve, or a mixture thereof.

A zeolitic molecular sieve is a microporous aluminosilicate having any one of the framework structures listed in the Database of Zeolite Structures published by the International Zeolite Association (IZA). The framework structures include, but are not limited to those of the CHA, BEA, FAU, LTA, MFI, and MOR types. Non-limiting examples of zeolites having these structures include chabazite, faujasite, zeolite Y, ultrastable zeolite Y, beta zeolite, mordenite, silicalite, zeolite X, and ZSM-5. Aluminosilicate zeolites can have a silica-to-alumina molar ratio (SAR, defined as SiO₂/Al₂O₃) from 5 to 200, from 10 to 180, or from about 20 to 150.

As used herein, the term "non-zeolitic molecular sieve" refers to corner sharing tetrahedral frameworks where at least a portion of the tetrahedral sites are occupied by an element other than silicon or aluminum. Specific non-limiting examples of non-zeolitic molecular sieves include silicoaluminophosphates such as SAPO-34, SAPO-37 and SAPO 44. The silicoaluminophosphates can have framework structures that contain framework elements that are found in zeolites, such as BEA, CHA, FAU, LTA, MFI, MOR and other types described below.

The SCR catalyst can comprise a small-pore, a medium-pore or a large-pore molecular sieve, or combinations thereof.

The SCR catalyst can comprise a small-pore molecular sieve selected from the group consisting of aluminosilicate molecular sieves, metal-substituted aluminosilicate molecular sieves, aluminophosphate (AIPO) molecular sieves, metal-substituted aluminophosphate (MeAIPO) molecular sieves, silico-aluminophosphate (SAPO) molecular sieves, and metal substituted silico-aluminophosphate (MeAPSO) molecular sieves, and mixtures thereof. The SCR catalyst can comprise a small-pore molecular sieve selected from the group of Framework Types consisting of ACO, AEI, AEN, AFN, AFT, AFX, ANA, APC, APD, ATT, CDO, CHA, DDR, DFT, EAB, EDI, EPI, ERI, GIS, GOO, IHW, ITE, ITW, LEV, KFI, LTA, MER, MON, NSI, OWE, PAU, PHI, RHO, RTH, SAT, SAV, SIV, THO, TSC, UEI, UFI, VNI, YUG, and ZON, and mixtures and/or intergrowths thereof. The small pore molecular sieve may be selected from the group of Framework Types consisting of AEI, AFX, CHA, DDR, ERI, ITE, KFI, LTA, LEV, and SFW.

The SCR catalyst can comprise a medium-pore molecular sieve selected from the group of Framework Types consisting of AEL, AFO, AHT, BOF, BOZ, CGF, CGS, CHI, DAC, EUO, FER, HEU, IMF, ITH, ITR, JRY, JSR, JST, LAU, LOV, MEL, MFI, MFS, MRE, MTT, MVY, MWW, NAB, NAT, NES, OBW, PAR, PCR, PON, PUN, RRO, RSN, SFF, SFG, STF, STI, STT, STW, -SVR, SZR, TER, TON, TUN, UOS, VSV, WEI, and WEN, and mixtures and/or intergrowths thereof. The medium pore molecular sieve may be selected from the group of Framework Types consisting of FER, MFI, and STT.

The SCR catalyst can comprise a large-pore molecular sieve selected from the group of Framework Types consisting of AFI, AFR, AFS, AFY, ASV, ATO, ATS, BEA, BEC, BOG, BPH, BSV, CAN, CON, CZP, DFO, EMT, EON, EZT, FAU, GME, GON, IFR, ISV, ITG, IWR, IWS, IWV, IWW, JSR, LTF, LTL, MAZ, MEI, MOR, MOZ, MSE, MTW, NPO, OFF, OKO, OSI, RON, RWY, SAF, SAO, SBE, SBS, SBT, SEW, SFE, SFO, SFS, SFV, SOF, SOS, STO, SSF, SSY, USI, UWY, and VET, and mixtures and/or intergrowths thereof. The large pore molecular sieve can be selected from the group of Framework Types consisting of BEA, MOR and OFF.

A metal exchanged molecular sieve can have at least one metal from one of the groups VB, VIB, VIIB, VIIIB, IB, or IIB of the periodic table deposited onto extra-framework sites on the external surface or within the channels, cavities, or cages of the molecular sieves. Metals may be in one of several forms, including, but not limited to, zerovalent metal atoms or clusters, isolated cations, mononuclear or polynuclear oxycations, or as extended metal oxides. The metals can be iron, copper, and mixtures or combinations thereof.

A metal exchanged molecular sieve can contain in the range of from about 0.10 wt% to about 10 wt% of a group VB, VIB, VIIB, VII IB, IB, or IIB metal located on extra framework sites on the external surface or within the channels, cavities, or cages of the molecular sieve.

The metal exchanged molecular sieve can be a copper (Cu) supported small pore molecular sieve having from 0.1 to 20.0 wt%, 1 wt% to 6 wt%, or from 1.8 wt% to 4.2 wt% copper relative to the total weight of the metal exchanged molecular sieve.

The metal exchanged molecular sieve can be an iron (Fe) supported small pore molecular sieve having from 0.1 to 20.0 wt%, 1 wt% to 6 wt%, or from 1.8 wt% to 4.2 wt% iron relative to the total weight of the metal exchanged molecular sieve.

The SCR catalyst can be coated to the partial wall-flow filter substrate from the inlet end only, from the outlet end only, or from both the inlet end and the outlet end.

In some embodiments, SCR catalyst has a coating length of 100% of the substrate length (L).

The SCR catalyst may have a coating length of from 50 to 90%, from 55 to 85%, or from 60 to 80% of the substrate length (L).

FIG. 7 shows a catalytic partial wall-flow filter 700 that comprises a partial wall-flow filter substrate coated with a SCR catalyst. The catalytic partial wall-flow filter 700 includes a plurality of porous walls 720 to form a plurality of channels. The channels include some which are unplugged (unplugged channels 712) and some which are plugged (plugged channels 711). In this embodiment, the plugs 730 are all included on the outlet end 702 of the filter 700. In this embodiment, approximately 50% of the channels are plugged and the remainder comprise flow-through channels. A SCR catalyst 750 is coated from the inlet end of the filter 700.

The SCR catalyst may have a washcoat loading of between 0.1 g/in³ and 5 g/in³, between 0.1 g/in³ and 4.5 g/in³, or between 0.5 g/in³ and 4 g/in³. The "washcoat loading" refers to the weight of the washcoat (after calcination) per unit volume of the whole catalytic partial wall-flow monolith filter. The volume of the whole catalytic partial wall-flow filter is calculated based on its cross-sectional area and length; it does not take into account the number of channels per square inch.

According to a second aspect there is provided a method for the manufacture of a catalytic partial wall-flow monolith filter, the method comprising:
a) providing a partial wall-flow filter substrate having an inlet end, an outlet end, and a plurality of porous walls forming channels from the inlet end to the outlet end, wherein some of the channels are plugged channels and some are unplugged flow-through channels; and
(b) applying a SCR catalyst washcoat slurry on the porous walls to form a coated wall -flow filter substrate;
(c) calcining the coated wall-flow filter substrate to produce the partial catalytic wall-flow filter.

The SCR catalyst washcoat slurry may have a viscosity of between 5 and 1500 cPs, between 500 and 1200 cPs, or between 700 and 900 cPs. The viscosity can be measured at 20°C on a Brookfield RV DVII+Extra Pro viscometer using a SC4-27 spindle at 50 rpm spindle speed.

The SCR catalyst washcoat slurry may be applied to the substrate by known methods. There are many suitable ways to apply the SCR catalyst washcoat slurry to the substrate. For example, coating of the substrate by the washcoat slurry can be performed by immersing the substrate vertically in the slurry such that the desired coating length is achieved. The substrate can be left in the slurry for a sufficient period of time to allow the desired amount of the slurry to move into the substrate. The substrate is removed from the slurry, and excess slurry is removed from the wall-flow filter substrate first by allowing it to drain from the channels of the substrate, then by blowing on the slurry on the substrate with compressed air, and/or pulling a vacuum.

Another method for coating the partial wall-flow filter substrate include the steps of: (a) depositing a pre-determined amount of a washcoat slurry into a containment means at an upper end of the filter substrate using a shower head, wherein the shower head comprises a plurality of apertures arranged to dispense the washcoat slurry onto an upper end face of the filter substrate; and (b) coating the channels having open ends at the upper end of the filter substrate with the pre-determined amount of washcoat slurry from the containment means by applying a vacuum to a lower end of the filter substrate to draw the liquid along the channels having open ends at the upper end of the filter substrate. See, e.g., US20180229228A1.

The coated substrates are typically dried at about 110 °C and calcined at a higher temperature, e.g., 300 to 500 °C.

According to a third aspect there is provided an exhaust gas treatment system for treating a flow of a combustion exhaust gas, the system comprising the catalytic partial wall-flow filter according to this invention, wherein the inlet end is upstream of the outlet end.

The exhaust gas treatment system may employ, in addition to the catalytic partial wall-flow filter according to this invention, other well-known exhaust gas treatment components which are all well known to the skilled person. For simplicity the abbreviations are provided here. These include diesel oxidation catalysts (DOC), selective catalytic reduction (SCR) catalyst component, ammonia slip catalysts (ASC), selective catalytic reduction filters (SCRF), ammonia slip catalyst filters (ASCF), diesel particulate filters (DPF), and catalyzed soot filters (CSF).

It has recently been observed that the use of a nitrogenous reductant (especially urea/ammonia) injection into an exhaust gas stream can lead to the production of certain aggregated compounds. The polymerized material then takes the form of additional fine particulate matter that can be released to the atmosphere.

A discussion of these polymerized particulate exhaust gass may be found in SAE 2017-01-0915. Here it is explained that depending on the urea doser, decomposition reaction tube (DRT) design and operating conditions, incomplete decomposition of injected urea could lead to solid urea deposit formation in the diesel aftertreatment system. The formed deposits could lead to engine back pressure increase and NOx treatment performance deterioration. The formed urea deposits could be further transformed to chemically more stable substances upon exposure to hot exhaust gas, therefore it is critical to understand this transformation process. The results of the author's experiments indicate that 1) below urea melting temperature (130°C), the formed urea deposits are still primarily urea; 2) at a temperature range of 130-190°C, urea transforms to a combination of urea, biuret and cyanuric acid; and 3) above biuret melting temperature (190°C), cyanuric acid and ammelide are formed. At greater than 200°C, urea experiences fast chemical transformation via urea decomposition, biuret formation followed by subsequent biuret decomposition, and turns into cyanuric acid in a short time.

Thus, the polymerisation of urea and ammonia components in the hot exhaust gas can lead to the formation of polymeric particulate matter. This particulate matter is typically very fine, but it is exactly this sort of fine material that is now the subject of ever more stringent regulation. Furthermore, since the formation of the particulate matter can only occur after the reductant is dosed into the exhaust gas treatment system, it is generally formed both after any conventional particulate filter in the system, for example DPF or CSF, and under a lower temperature environment (i.e., underfloor configurations) where conventional regeneration of such filters would be difficult.

Although the exact nature of these particulates will vary depending on the nature of the nitrogenous reductant used and the operating conditions, the particulates will be generally referred to as "reductant-derived particulates" hereafter for simplicity.

Due to the changing exhaust gas flow conditions and changing urea demand depending on the NOₓ flow, the amount of injected urea solution is constantly changing. Therefore, spray droplet sizes are varying within one injection pulse and over time. It might therefore be a promising approach to optimise the injection conditions either through the reintroduction of air assisted systems, or the application of multiple nozzles with optimised spray droplet sizes.

The present inventors have now discovered that it is possible to address these concerns by using the catalytic partial wall-flow filter according to this invention in an exhaust system.

The exhaust gas treatment system has an upstream end for receiving exhaust gas from an engine and this typically comprises a manifold. The exhaust gas treatment system has a downstream end for emitting the treated exhaust gases to the atmosphere. The components of the exhaust gas treatment system can therefore be ordered according to their position from upstream to downstream, with upstream components contacting the exhaust gases sooner than those downstream.

The exhaust gas treatment system may comprise in order from upstream to downstream, a first particulate filter, means for injecting a nitrogenous reductant, and a selective catalytic reduction (SCR) component, wherein the system further comprises a second particulate filter that is a catalytic partial wall-flow filter according to this invention arranged downstream of the means for injecting a nitrogenous reductant. The first particulate filter is upstream of the other listed components and is intended to remove the soot components from the exhaust gases. The first particulate filter may itself be downstream of other components and a preferred system comprises a diesel oxidation catalyst (DOC) upstream of the first particulate filter and preferably as the first component of the system. The first particulate filter can be a diesel particulate filter (DPF) or a catalyzed soot filter (CSF). In use these components can be regenerated to address soot build-up. The provision of an upstream first particulate filter prevents the build-up of soot on the second particulate filter. This is desirable because it is difficult to handle a large build-up of material in an end-of-system component due to the relatively lower temperatures. It would be more energy intensive to raise the temperature of the second particulate filter as would be required were it to have soot build-up. In contrast, the build-up of reductant-derived particulates is relatively low, such that regeneration can be performed rarely, if necessary.

Fig. 8 shows one example of the exhaust gas treatment system that comprises in order from upstream to downstream, an optional DOC, a first particulate filter which is a CSF, an injector, a second particulate filter that is a catalytic partial wall-flow filter according to this invention, a SCR component comprising a flow-through substrate and a SCR catalyst, and an optional ASC catalyst (e.g., ASC catalyst on a flow-through substrate). According to a fourth aspect there is provided a method for treating a flow of a combustion exhaust gas comprising NOx, the method comprising passing the exhaust stream through the catalytic partial wall-flow filter according to this invention, wherein the inlet end is upstream of the outlet end.

### EXAMPLE 1: FILTER A

A washcoat slurry was prepared by mixing vanadyl oxalate, antimony triacetate, cerium carbonate, a high surface area titania powder, and an aqueous dispersion of colloidal silica. Specifically, the high surface area titania powder employed was DT-51d obtained from Tronox^{®} and the aqueous dispersion of colloidal silica employed was Ludox^{®} AS-40 from Grace. The aqueous washcoat slurry had a pH of 5-8.

An asymmetric cylindrical cordierite partial wall-flow filter substrate (300/12, length = 3.0 inch, diameter = 9.5 inch, porosity=65%, mean pore diameter=16.2 µm) comprises 50% of channels having a square cross-section with dimension of 0.058 inch × 0.058 inch, and 50% having a square cross-section with dimension of 0.044 inch × 0.044 inch. All the bigger channels of the filter substrate are plugged at the outlet end. None of the smaller channels are plugged.

The filter substrate was coated by the coating method disclosed in US20180229228A1 from the inlet with the above washcoat slurry to a length of about 60% of the substrate length. The coated substrate was dried at 110°C for approximately 15 minutes, and subsequently calcined at 500°C for approximately 10 minutes. The calcined partial filter (FILTER A) contains 92 g/ft³ Vanadium (V), 131 g/ft³ Antimony (Sb), 87 g/ft³ Cerium (Ce), and has a washcoat loading of 2.0 g/in³.

### EXAMPLE 2: FILTER B

A washcoat slurry was prepared by mixing vanadyl oxalate, antimony triacetate, cerium carbonate, a high surface area titania powder, and an aqueous dispersion of colloidal silica. Specifically, the high surface area titania powder employed was DT-51d obtained from Tronox^{®} and the aqueous dispersion of colloidal silica employed was Ludox^{®} AS-40 from Grace. The aqueous washcoat slurry had a pH of 5-8.

An asymmetric cylindrical cordierite partial wall-flow filter substrate (300/12, length = 3.0 inch, diameter = 9.5 inch, porosity=65%, mean pore diameter=16.2 µm) comprises 50% of channels having a square cross-section with dimension of 0.058 inch × 0.058 inch, and 50% having a square cross-section with dimension of 0.044 inch × 0.044 inch. All the bigger channels of the filter substrate are plugged at the outlet end. None of the smaller channels are plugged.

The filter substrate was coated by the coating method disclosed in US20180229228A1 from the inlet with the above washcoat slurry to a length of about 80% of the substrate length. The coated substrate was dried at 110°C for approximately 15 minutes, and subsequently calcined at 500°C for approximately 10 minutes. The calcined partial filter (FILTER B) contains 125 g/ft³ Vanadium (V), 177 g/ft³ Antimony (Sb), 117 g/ft³ Cerium (Ce), and has a washcoat loading of 2.7 g/in³.

### EXAMPLE 2: ENGINE TEST

Fresh FILTER A and Fresh FILTER B were each fitted into an exhaust system of a diesel engine containing an exhaust gas treatment system as shown in Fig. 9, which includes a DOC, a CSF, an urea injector, a partial filter, a V-based SCR catalyst article containing a flow-through substrate, and optional ASC. The engine was run at steady state and at the following conditions to probe the SCR performance of the catalysts:
- 13-L Heavy Duty Diesel Engine
- T = 450 °C, Mass Flow = 900 kg/h
- Ammonia to NOx Ratio (ANR) = 0.6, 1.1, 1.35
- Partial Filter brick volume = 213 in³
- Space Velocity = 210.000/h

The pressure drop across the partial filters are shown in Table 1. The NOx conversions, N2O selectivities, and filtration efficiencies at various Ammonia to NOx Ratios are shown in Tables 2-4. The results show that using a partial SCR filter downstream to a CSF resulted in PN10-reduction down to 0.9 × 10¹¹ - 2.2 × 10¹¹ #/kWh, in a wide range of ANR = 0.6 - 1.35 and extreme conditions of engine operation (T=450 °C, mass flow = 900 kg/h). This allows for a considerable margin in PN10-emissions against the PN10-limits stated in the latest Euro7 HDD-revision (6.0 × 10¹¹ #/kWh for WHTC/WHSC cycles).

**Table 1**

| Partial Filter | Pressure Drop (mBar) |
|---|---|
| FILTER A | 41 |
| FILTER B | 45 |

**Table 2: ANR = 0.6**

| Partial Filter | NOx-Conversion (%) | N2O Selectivity (%) | PN10 post SCR Unit (#/kWh) | Filtration Efficiency (%) |
|---|---|---|---|---|
| FILTER A | 53 | 1.01 | 0.9 × 10¹¹ | 69 |
| FILTER B | 55 | 1.03 | 1.5 × 10¹¹ | 43 |

**Table 3: ANR = 1.1**

| Partial Filter | NOx-Conversion (%) | N2O Selectivity (%) | PN10 post SCR Unit (#/kWh) | Filtration Efficiency (%) |
|---|---|---|---|---|
| FILTER A | 84 | 1.2 | 1.2 × 10¹¹ | 66 |
| FILTER B | 87 | 1.3 | 1.6 × 10¹¹ | 43 |

**Table 4: ANR = 1.35**

| Partial Filter | NOx-Conversion (%) | N2O Selectivity (%) | PN10 post SCR Unit (#/kWh) | Filtration Efficiency (%) |
|---|---|---|---|---|
| FILTER A | 90 | 1.28 | 1.8 × 10¹¹ | 56 |
| FILTER B | 94 | 1.35 | 2.2 × 10¹¹ | 42 |

## Claims

1. A catalytic partial wall-flow filter for use in an exhaust gas treatment system, the filter comprising:
b) a partial wall-flow filter substrate having an inlet end, an outlet end, and a plurality of porous walls forming channels from the inlet end to the outlet end, wherein some of the channels are plugged channels and some are unplugged flow-through channels; and
c) a selective catalytic reduction (SCR) catalyst coated on the porous walls.

2. The catalytic partial wall-flow filter of claim 1, wherein the channels are plugged only adjacent to the inlet end.

3. The catalytic partial wall-flow filter of claim 2, wherein about 50% of the channels are plugged.

4. The catalytic partial wall-flow filter of claim 1, wherein the channels are plugged only adjacent to the outlet end.

5. The catalytic partial wall-flow filter of claim 4, wherein about 50% of the channels are plugged.

6. The catalytic partial wall-flow filter of any of claims 1-5, wherein a hydraulic diameter of the plugged channels is larger than a hydraulic diameter of the unplugged flow-through channels.

7. The catalytic partial wall-flow filter of any of claims 1-5, wherein a hydraulic diameter of the plugged channels is smaller than a hydraulic diameter of the unplugged flow-through channels.

8. The catalytic partial wall-flow filter of any proceeding claims, wherein the SCR catalyst comprises vanadium and antimony.

9. The catalytic partial wall-flow filter of claim 8, wherein the SCR catalyst has a molar ratio of antimony to vanadium of from 0.6 to 0.9.

10. The catalytic partial wall-flow filter of claim 9, wherein the SCR catalyst comprises vanadium, antimony, and cerium.

11. The catalytic partial wall-flow filter of any proceeding claims, wherein the SCR catalyst has a coating length of from 50 to 90% of the substrate length (L).

12. The catalytic partial wall-flow filter of any proceeding claims, wherein the SCR catalyst has a coating length of from 60 to 80% of the substrate length (L).

13. A method for the manufacture of a catalytic partial wall-flow filter of any of claim 1 to claim 12, the method comprising: (a) providing a partial wall-flow filter substrate having an inlet end, an outlet end, and a plurality of porous walls forming channels from the inlet end to the outlet end, wherein some of the channels are plugged channels and some are unplugged flow-through channels; (b) applying a SCR catalyst washcoat slurry on the porous walls to form a coated wall-flow filter substrate; and (c) calcining a coated wall-flow filter substrate obtained to produce the partial catalytic wall-flow filter.

14. An exhaust gas treatment system for treating a flow of a combustion exhaust gas, the system comprising the catalytic partial wall-flow filter according to any of claims 1 to 12.

15. A method for treating a flow of a combustion exhaust gas comprising NOx, the method comprising passing the exhaust stream through the catalytic partial wall-flow filter of any of claims 1 to 12, wherein the inlet end is upstream of the outlet end.
